# EUROPÄISCHE PATENTSCHRIFT

(11) **EP 1 871 490 B1**
(45) Veröffentlichungstag und Bekanntmachung des Hinweises auf die Patenterteilung: **09.06.2010**
(21) Anmeldenummer: 06724546.4
(22) Anmeldetag: 13.04.2006
(51) Int. Cl.: A63B 9/00, F16G 11/12

(54) **SEILSPANNVORRICHTUNG FÜR SEILNETZWERKE**
ROPE-TENSIONING DEVICE FOR ROPE NETWORKS
DISPOSITIF TENDEUR DE CORDE POUR RESEAUX DE CORDES

(30) Priorität: 13.04.2005 DE 102005017774; 03.06.2005 DE 102005026412; 13.04.2005 DE 202005006174 U; 03.06.2005 DE 202005009003 U; 22.03.2006 DE 202006004853 U
(43) Veröffentlichungstag der Anmeldung: 02.01.2008
(73) Patentinhaber: Berliner Seilfabrik GmbH & Co., 13407 Berlin (DE)
(72) Erfinder: KÖHLER, Karl-Heinz, 13509 Berlin (DE)
(74) Vertreter: Gulde, Klaus W.
(86) Internationale Anmeldenummer: PCT/EP2006/003784
(87) Internationale Veröffentlichungsnummer: WO 2006/108715

(56) Entgegenhaltungen:
- WO-A-03/063968
- DE-U1- 29 516 449

## Beschreibung

Die Erfindung bezieht sich auf eine Seilspannvorrichtung für Seilnetzwerke.

Als besonders erfolgreich bei der Gestaltung von Spielplätzen haben sich zwei- und dreidimensional ausgebildete Netzwerke aus Seilnetzen, die mit variablen Gerüstsystemen kombiniert werden, erwiesen. Mittels dieser Seilnetzwerke lassen sich die unterschiedlichsten Spielwelten in Verbindung mit räumlichen Strukturen, die die körperliche Bewegung der Kinder fördern, darstellen.

Die aus verbundenen Seilen bestehenden Seilnetzwerke werden innerhalb eines vorgegebenen Gerüstsystems gespannt, wobei eine große Flexibilität der Gerüste dadurch erzielbar ist, dass einzelne Gerüststangen mittels kugelförmiger Hohlkörper (Knotenpunkte, Gerüstpunkte) miteinander verbunden werden und dadurch viele interessante, geometrische Formen geschaffen werden können. Innerhalb dieser Gerüste werden dann durch Befestigung an den hohlkugelförmigen Körpern und an den Gestängen die Seilnetzwerke befestigt und gespannt.

Als Spannpunkte eignen sich insbesondere Gerüstknotenpunkte, Toppunkte von Stützmasten und Fußpunkte (Spannpunkte im Bereich der Bodenbefestigungen).

Besondere Konstruktionen von Seilnetzstrukturen bestehen darin, dass von Stützmasten, beispielsweise von Mittelmasten ausgehend, die Seile räumlich orientiert und gespannt werden. Insbesondere besteht hier das Problem, Hauptseile die von der Spitze eines Mittelmastes zum Boden geführt werden und dort verankert sind, zu spannen. Die Seilenden werden in der Regel zum Zwecke des Spannens der Seilnetzwerke zu Ösen verpresst und mittels Schäkel fixiert und mit außenliegenden Spannvorrichtungen gespannt. Es hat sich als großer Nachteil herausgestellt, außenliegende, der Witterung und Korrosion ausgesetzte Spannelemente einzusetzen. Darüber hinaus liegen diese Spannelemente zum Teil im Boden, innerhalb des als Fallschutz eingebrachten Sand, Kies oder ähnlichen falldämpfenden Materialien. Besonders erschwert ist dann der Zugang, wenn als Fallschutz eine gebundene Schicht aus Gummipartikeln aufgebracht wird. Ein Warten und ein eventuell notwendiges Nachspannen der Netzstruktur ist dann nur unter Aufwand möglich und wird somit oft gemieden. Daraus entstehen Gefahren für die sichere Bespielbarkeit der Geräte.

In der Schrift WO 03/063968 A1 wird eine Seilspannvorrichtung beschrieben, bei der Seilenden mit kugelförmigen als Hohlkörper oder Vollkörper ausgebildeten Knotenpunkten eines Gerüstes verbunden sind. Die Seile werden mittels Seilaufnahmen gehaltert, die sich innerhalb oder außerhalb der Knotenpunkte befinden und so konzipiert sind, dass Verletzungen vermieden werden.

Der Erfindung liegt die Aufgabe zugrunde, eine weitere Seilspannvorrichtung, insbesondere für Seilnetzwerke anzubieten, deren Spannmechanismus außerhalb der von den Spielenden erreichbaren Bereichen angeordnet und vollständig bzw. weitestgehend verdeckt angebracht ist. Die Wartung der Spannvorrichtung und die Bedienbarkeit des Spannmechanismus soll ohne Einschränkung möglich sein.

Die Lösung der Aufgabe erfolgt mit den Merkmalen des Anspruches 1.

So ist die erfindungsgemäße Lösung der Aufgabe durch eine Seilspannvorrichtung für Seilnetzwerke gegeben, wobei das Seilnetzwerk miteinander verbundene Seile umfasst, die dadurch gekennzeichnet ist, dass Teile eines Seilspanners zumindest teilweise in einem Innenraum eines Rohrstückes angeordnet sind und Seile in dem Innenraum des Rohrstückes gehalten sind.

Vorteilhafterweise ist dieses erfindungsgemäße Rohrstück mit Seilspanner mit verschiedenen Gerüstelementen, wie Stützmaste, Mittelmaste, Gerüstknotenpunkte und Haltevorrichtungen im Bodenbereich kombinierbar.

Vorteilhafte Weiterbildungen sind in den Unteransprüchen angegeben.

In einer Ausgestaltung der Erfindung ist vorgesehen, dass der Seilspanner ein Widerlager, eine durch das Widerlager geführte und dort drehbar gelagerte Spannstange und ein auf der Spannstange verschiebbar angeordnetes Seilaufnahmeteil umfasst.

In einer weiteren Ausgestaltung ist vorgesehen, dass das Widerlager und die Spannstange außerhalb des Rohrstückes im Bereich eines Rohrstückendes angeordnet sind.

Eine vorteilhafte Weiterbildung ist **dadurch gekennzeichnet, dass** das Widerlager außerhalb des Rohrstückes am Rohrstückende aufgesetzt und befestigt ist.

Eine weitere vorteilhafte Ausgestaltung sieht vor, dass ein Spannteil der Spannstange außerhalb des Rohrstückes angeordnet ist.

Eine weitere Ausgestaltung ist **dadurch gekennzeichnet, dass** die Spannstange ein Gewinde aufweist, auf der das ein Innengewinde aufweisende Seilaufnahmeteil durch Drehung verschiebbar angeordnet ist.

Eine weitere Ausgestaltung ist **dadurch gekennzeichnet, dass** das Seilaufnahmeteil Befestigungselemente für die Enden der Seile aufweist.

Eine weitere Ausgestaltung sieht vor, dass das Widerlager an der inneren Wandung eines auf dem Rohrstück aufgesetzten Hohlkörpers befestigt ist, wobei die Spannstange durch die Hohlkörper geführt und das Spannteil der Spannstange so angeordnet ist, dass es außerhalb des Hohlkörpers bedienbar ist.

Eine weitere Ausgestaltung sieht vor, dass das Rohrstückende mit einem Seilöffnungen aufweisenden Hohlkörper abgedeckt ist, wobei der Hohlkörper einteilig oder mehrteilig zusammengesetzt ist.

Als weitere vorteilhafte Ausgestaltung ist vorgesehen, dass der Seilspanner, ein Seilaufnahmeteil, eine durch dieses geführte und dort drehbar fixierte Spannstange mit Spannteil und ein im Innenraum des Rohrstückes befestigte, eine Bohrung mit Innengewinde aufweisende Halteplatte umfasst, in die die ein Außengewinde aufweisende Spannstange eindrehbar ist.

Eine Weiterbildung ist **dadurch gekennzeichnet, dass** der Seilspanner ein Seilaufnahmeteil und eine am Seilaufnahmeteil fixierte Spannstange umfasst, deren Spannteil außerhalb des Innenraumes des an einem Hohlkörper angesetzten Rohrstückes in diesem Hohlkörper angeordnet ist.

Eine weitere Ausgestaltung ist **dadurch gekennzeichnet, dass** der Hohlkörper eine mit einem Deckel verschließbare Spannöffung aufweist. Durch diese Spannöffnung ist es möglich, den Spannmechanismus der Vorrichtung zu bedienen.

Eine weitere Ausgestaltung sieht vor, dass die Seile im Bereich der Seilöffnungen auf einer seilschonenden Unterlage aufliegen, so dass dort die vorhandene, stärkere Belastung der Seile aufgrund von wirkende Reibungskräften minimiert wird.

In einer weiteren Ausgestaltung der Erfindung ist auf einer Mastspitze eines als Mastrohr ausgebildeten Mittelmastes ein Seilspanner für Seile des Seilnetzwerkes angeordnet.

In einer Weiterbildung der Erfindung ist vorgesehen, dass der Seilspanner ein auf die Mastspitze des Mastrohres aufgesetztes und dort befestigtes Widerlager aufweist, in dem eine Spannstange, auf der ein verschiebbares Seilaufnahmeteil angeordnet ist, drehbar gelagert ist.

In einer weiteren Ausgestaltung der Erfindung ist vorgesehen, dass der Seilspanner einen auf die Mastspitze des Mastrohres aufgesetzten und dort befestigten Hohlkörper mit Seilöffnungen und eine vertikal durch den Hohlkörper in das Mastrohr geführte Spannstange aufweist, an der die auf der Spannstange verschiebbare Seilaufnahme angeordnet ist, und die in der Wandung des Hohlkörpers als Widerlager drehbar gelagert ist.

Eine weitere, vorteilhafte Weiterbildung der Erfindung ist **dadurch gekennzeichnet, dass** die Spannstange des Seilspanners in einem als Bügel ausgebildeten Widerlager drehbar gelagert ist, wobei der Bügel mittels Schenkel mit der Mastspitze verbunden ist. Damit wird es möglich, stärkere Spannkräfte auf die Seile zu übertragen.

Eine weitere Ausgestaltung der Erfindung ist **dadurch gekennzeichnet, dass** die Mastspitze mit einem Hohlkörper verkleidet ist.

Die Erfindung wird im Folgenden an Ausführungsbeispielen und Zeichnungen näher erläutert.

Es zeigen
- Fig. 1: eine Darstellung eines räumlichen Seilnetzwerkes mit Mittelmast,
- Fig. 2: eine Darstellung eines Seilspanners mit einem Widerlager in einer Hohlkugel,
- Fig. 3: eine Schnittdarstellung eines außerhalb des Rohrstückendes angeordneten Widerlagers und Spannteiles,
- Fig. 4: eine weitere Darstellung der Anordnung eines Widerlagers,
- Fig. 5: eine Darstellung einer Abdeckung des Seilspanners mit einer Hohlkugel,
- Fig. 6 a+b: eine Darstellung einer seilschonenden Unterlage in Schnitt- und in Draufsicht,
- Fig. 7: eine Darstellung einer Hohlkörperabdeckung des Seilspanners an einem Toppunkt eines Stützmastes,
- Fig. 8: eine Darstellung eines Gerüstpunktes (Knotenpunkt) mit Seilspanner,
- Fig. 9: eine schematische geschnittene Darstellung einer weiteren Anordnung eines Seilspanners im Rohrstück,
- Fig. 10: eine Schnittdarstellung einer weiteren Anordnung eines Seilspanners im Rohrstück und
- Fig. 11 a+b: eineDraufsicht und Schnittdarstellung einer ein Widerlager aufnehmenden Grundplatte.

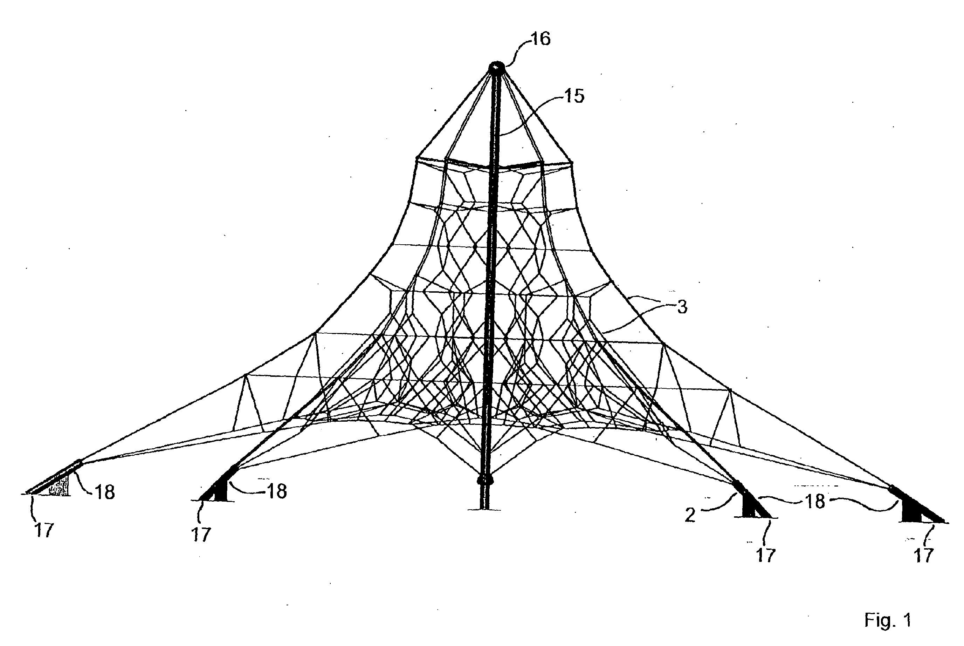

In Fig. 1 ist beispielhaft ein räumliches Seilnetzwerk mit einem Stützmast 15, der als Mittelmast ausgebildet ist, dargestellt. Im einem Toppunkt 16 des Stützmastes 15 laufen gespannte Seile 3 zusammen. Die Seile 3 werden an den Fusspunkten 17 mittels Bodenspanner 18 gehaltert. Der Bodenspanner 18 weist einen Rohrstück 2 auf, in dessen Innenraum 10 sich ein hier nicht dargestellter erfindungsgemäßer Seilspanner 1 befindet. Ein Spannen der Seile 3 ist auch durch Anordnung eines weiteren Seilspanners 1 im Toppunkt 16, der als ein Hohlkörper ausgebildet ist, möglich.

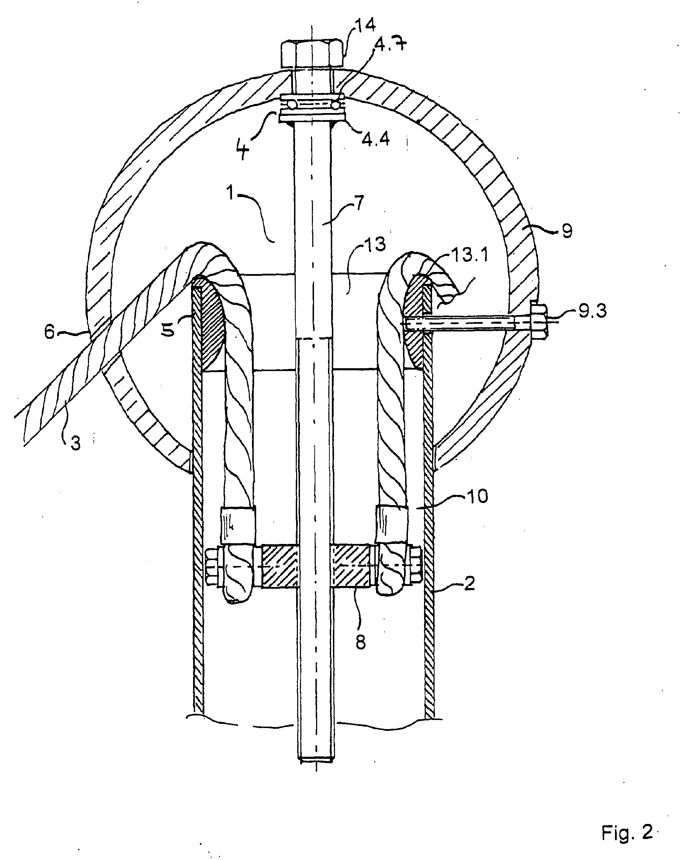

In Fig. 2 ist ein erfindungsgemäßer Seilspanner 1 dargestellt, der innerhalb eines Innenraumes 10 eines Rohrstückes 2 und innerhalb eines kugelförmigen Hohlkörpers 9 angeordnet ist. Durch die Wandung des Hohlkörpers 9 hindurch ist eine Spannstange 7 bis in den Innenraum 10 des Rohrstückes 2 geführt. Auf der Spannstange 7 ist ein Seilaufnahmeteil 8 angeordnet. Im Seilaufnahmeteil 8 sind die Enden der Seile 3 mit hier nicht dargestellten Befestigungselementen fixiert. Das Seilaufnahmeteil 8 ist auf der ein Außengewinde aufweisenden Spannstange 7 aufgeschraubt. Ein Spannteil 14, das außerhalb des Hohlkörpers 9 zugänglich ist, dient dazu, durch drehende Bewegung der Spannstange 7 das Seilaufnahmeteil 8 innerhalb des Rohrstückes so zu verschieben, dass eine ziehende Kraft auf die Seile 3 und damit ein Spannvorgang ausgeübt wird. Ein Widerlager 4 mit einer Gegenplatte 4.4 und einem Kugeldrucklager 4.7 erzeugt den hierfür erforderlichen Gegendruck. Die Seile 3 liegen auf einer seilschonenden Unterlage 13, dessen Oberfläche als Radius 13.1 ausgebildet ist. Die Unterlage 13 ist manschettenartig auf ein Rohrstückende 5 aufgesteckt. Mittels Halteschrauben 9.3 ist der Hohlkörper 9 und die Unterlage 13 am Rohrstück 2 befestigt.

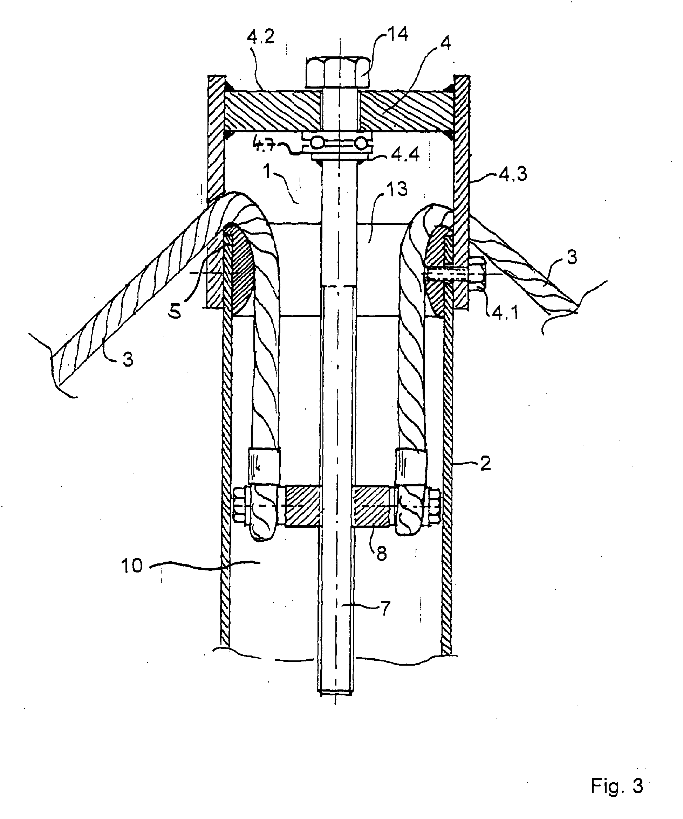

In Fig. 3 ist in einer Schnittdarstellung eines außerhalb des Rohrstückendes 5 angeordneten Widerlagers 4 mit dem Kugeldrucklager 4.7 und Spannteiles 14 der Spannstange 7 eine weitere erfindungsgemäße Ausgestaltung des Seilspanners 1 dargestellt. Das Widerlager 4 wird mittels eines Bügels 4.2 gehaltert. Der Bügel 4.2 ist über zwei Schenkel 4.3 und einer Befestigungsschraube 4.1 am Rohrstück 2 befestigt. Durch Drehung des Spannteiles 14 der Spannstange 7 werden die Seile 3 durch Verschiebung des Seilaufnahmeteils 8 einer Zugkraft ausgesetzt. Die Gegenplatte 4.4 des Widerlagers in Verbindung mit dem Bügel 4.2 sorgt für die erforderliche Gegenkraft, um die Seile 3 zu spannen. Die seilschonende Unterlage 13 sorgt an der Umlenkstelle der Seile 3 für eine schonende Auflage.

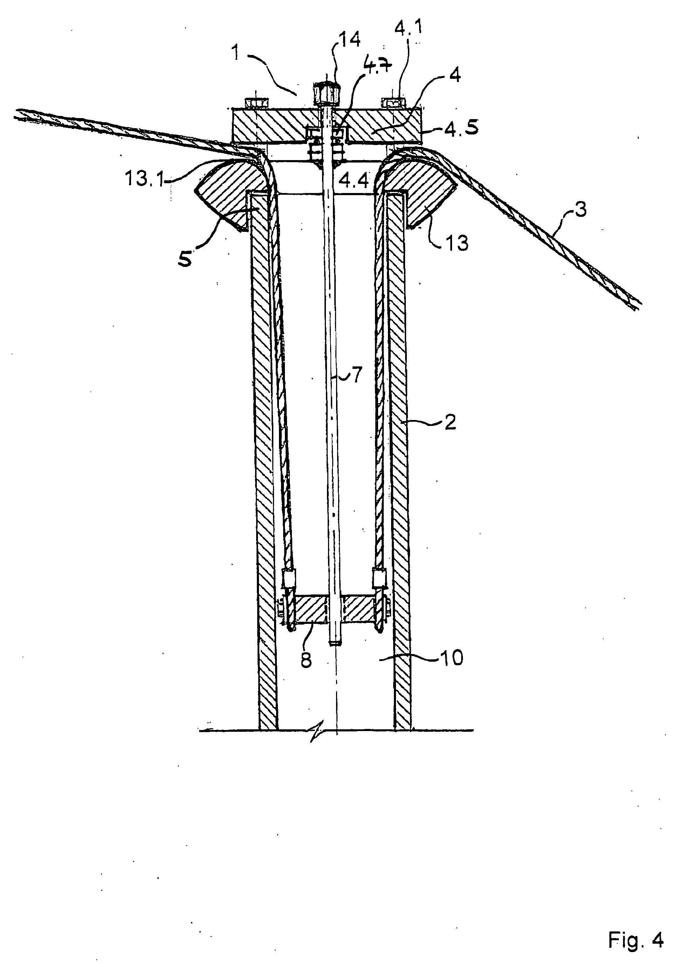

Fig. 4 zeigt eine weitere Darstellung der Anordnung eines Widerlagers 4 des Seilspanners 1. Das Widerlager 4 ist mittels Befestigungsschrauben 4.1 mit der Unterlage 13 verbunden. Die Gegenplatte 4.4 des Widerlagers 4 erzeugt in Verbindung mit einer Grundplatte 4.5 und dem Kugeldrucklager 4.7 beim Drehen des Spannteiles 14 und damit der Spannstange 7 für die erforderliche Gegenkraft, die für die Spannung der Seile 3 erforderlich ist. Auch hier wird durch Drehen des Spannteiles 14 und damit der Spannstange 7 das im Innenraum 10 des Rohrstückes 2 befindliche Seilaufnahmeteil 8 nach unten bewegt, so dass eine Zugkraft auf die am Seilaufnahmeteil 8 befestigten Seile 3 ausgeübt wird.

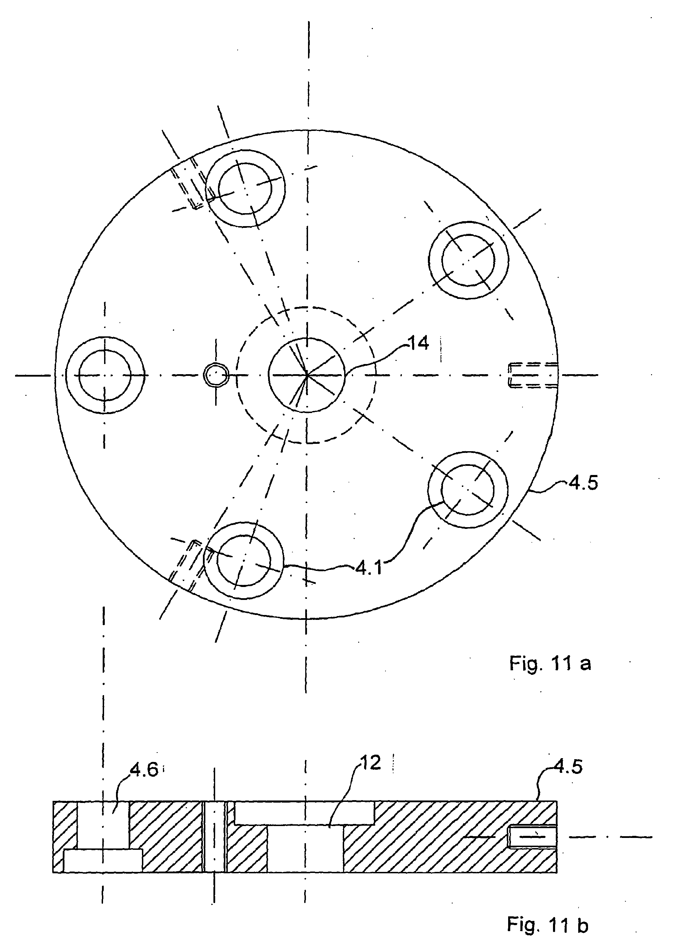

Die Grundplatte 4.5 ist in Fig. 11a und Fig. 11b in Draufsicht und im Schnitt beispielhaft dargestellt. Im Zentrum der Grundplatte ist eine Spannteilöffnung 12 vorgesehen, in die das Spannteil 14 der Spannstange 7 gehaltert ist. In Bohrungen 4.6 der Grundplatte 4.5 sind die Befestigungsschrauben 4.1 eingelassen.

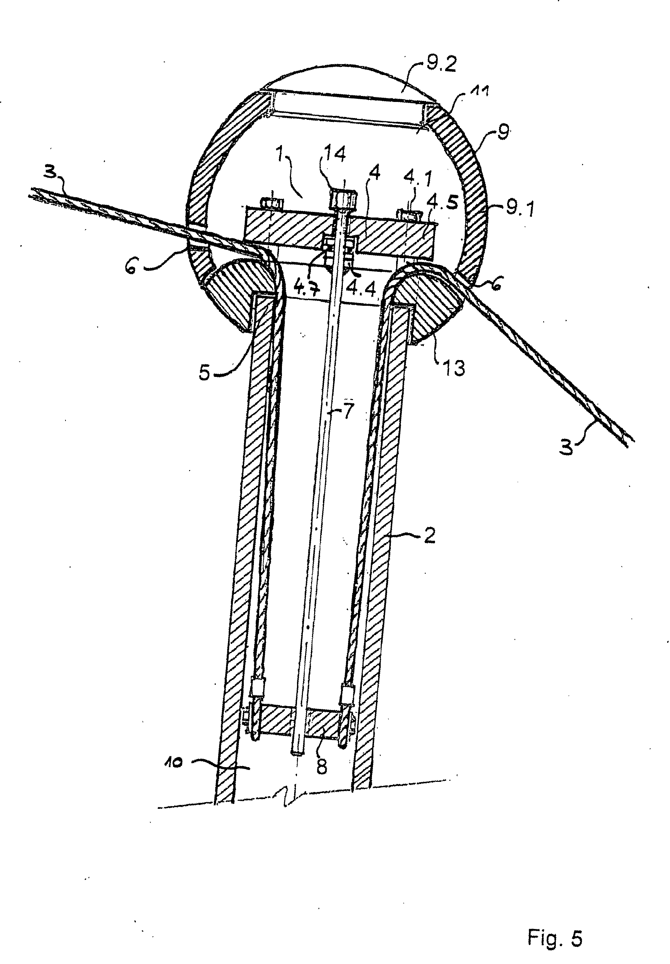

In Fig. 5 ist der in Fig. 4 dargestellte Seilspanner 1 noch einmal mit einer Abdeckung aus einem kugelförmigen Hohlkörper 9 dargestellt. Der Hohlkörper besteht aus einem Mittelteil 9.1 und einem Deckel 9.2. Der Deckel 9.2 verdeckt eine Spannöffnung 11. Nach Abnahme des Deckels 9.2 ist unmittelbar durch die Spannöffnung 11 eine Betätigung des Spannteiles 14 der Spannstange 7 möglich. Das Mittelteil 9.1 des Hohlkörpers 9 weist Seilöffnungen 6 auf, durch die die Seile 3 geführt werden. Das Mittelteil 9.1 und die seilschonende Unterlage 13 sind formschlüssig aufeinander abgestimmt. Diese Ausführung des erfindungsgemäßen Seilspanners 1 eignet sich insbesondere für den Toppunkt 16 eines Stützmastes 15.

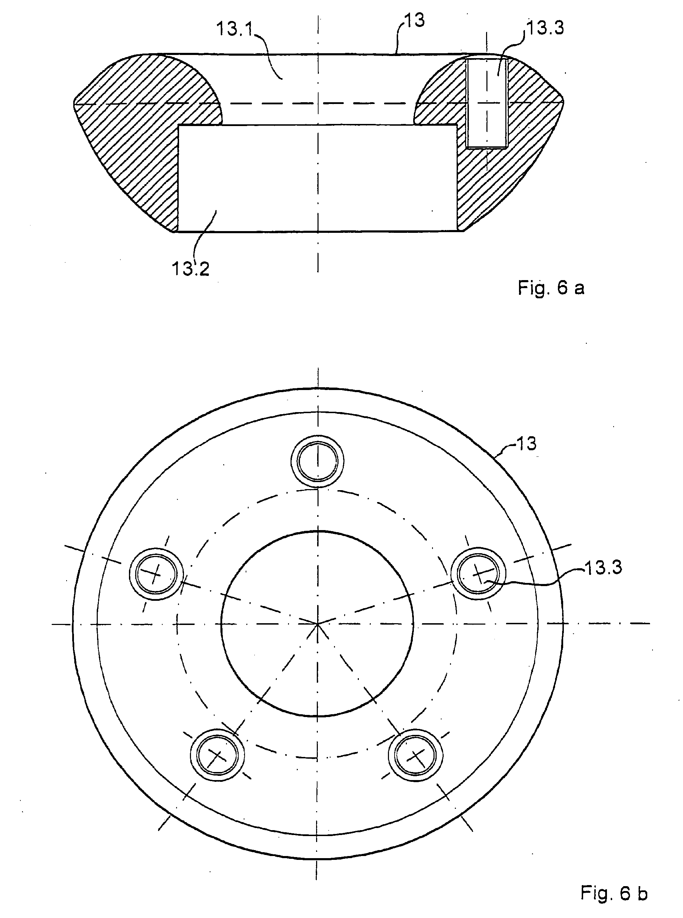

Die Darstellungen gemäß Fig. 6a und Fig. 6b zeigen die Ausbildung einer seilschonenden Unterlage 13 in Schnittdarstellung und in Draufsicht. Die beispielhafte Ausführung der seilschonenden Unterlage 13 zeigt einen Radius 13.1 und Gewindebohrungen 13.3, die für die Aufnahme der Befestigungsschrauben 4.1 des Widerlagers 4 dienen. Diese Unterlage 13 wird mit ihrer Rohrstückaufnahme 13.2 auf das Rohrstückende 5 geschoben. Die gekrümmte Oberfläche der Unterlage 13 sorgt für eine schonende Auflage der Seile 3.

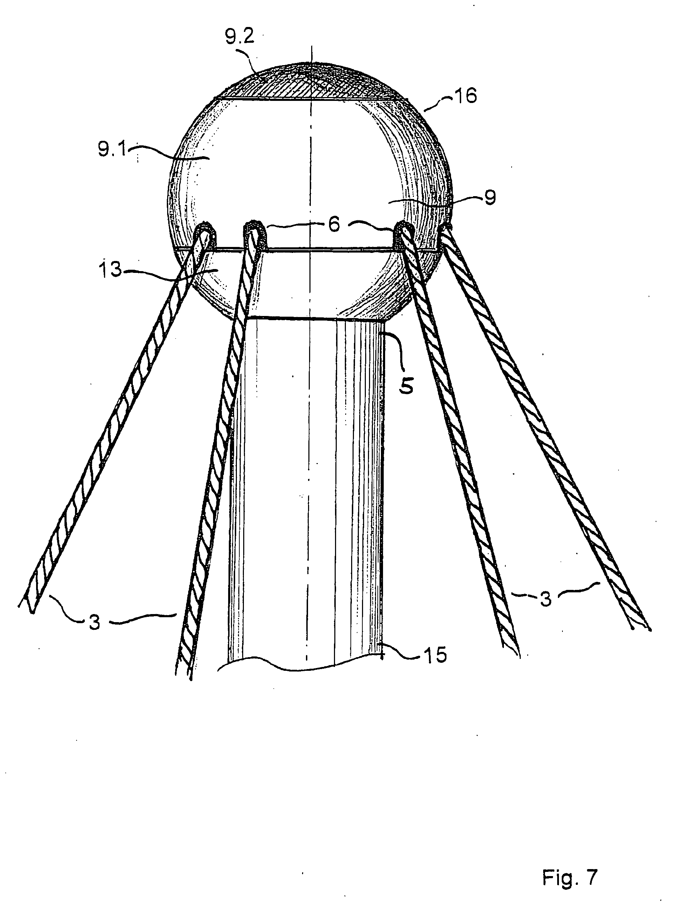

In Fig. 7 ist die Abdeckung der erfindungsgemäßen Seilspanner 1 mit dem kugelförmigen Hohlkörper 9 in perspektivischer Darstellung gezeigt. Im Mittelteil 9.1 des Hohlkörpers 9 sind die Seilöffnungen 6 eingelassen, durch die die Seile 3 hinein- bzw. herausgeführt werden. Hierbei liegen die Seile 3 auf der seilschonenden Unterlage 13 auf. Der Deckel 9.2 verdeckt die Spannöffnung 11, durch die das Spannteil 14 der Spannstange 7 betätigt werden kann. Diese Verkleidung des Seilspanners 1 eignet sich u.a. insbesondere für den Toppunkt 16 des Stützmastes 15.

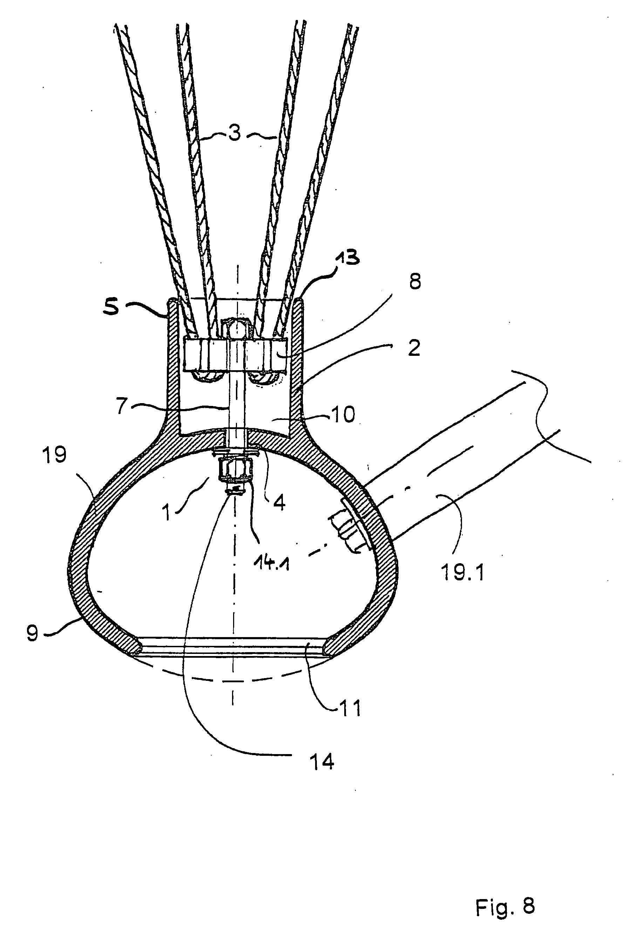

In Fig. 8 ist eine weitere Variante des erfindungsgemäßen Seilspanners 1 dargestellt. Der Hohlkörper 9 mit dem angesetzten Rohrstück 2 eignet sich insbesondere als Gerüstpunkt 19. In dem Gerüstpunkt 19 laufen verschiedene Gerüstrohre 19.1 zusammen. Zusätzlich werden Seile 3 gehaltert, die auch gespannt werden müssen. Durch die Spannöffnung 11 des Hohlkörpers 9 ist das Spannteil 14 der Spannstange 7 betätigbar. Durch Drehung einer dort befindlichen Mutter 14.1 wird über die Spannstange 7 das Seilaufnahmeteil 8 in Richtung Hohlkörper 9 verschoben und eine Zugkraft entsteht. Die Wandung des Hohlkörpers 9 erzeugt die notwendige Gegenkraft zur Erzeugung der erforderlichen Spannung.

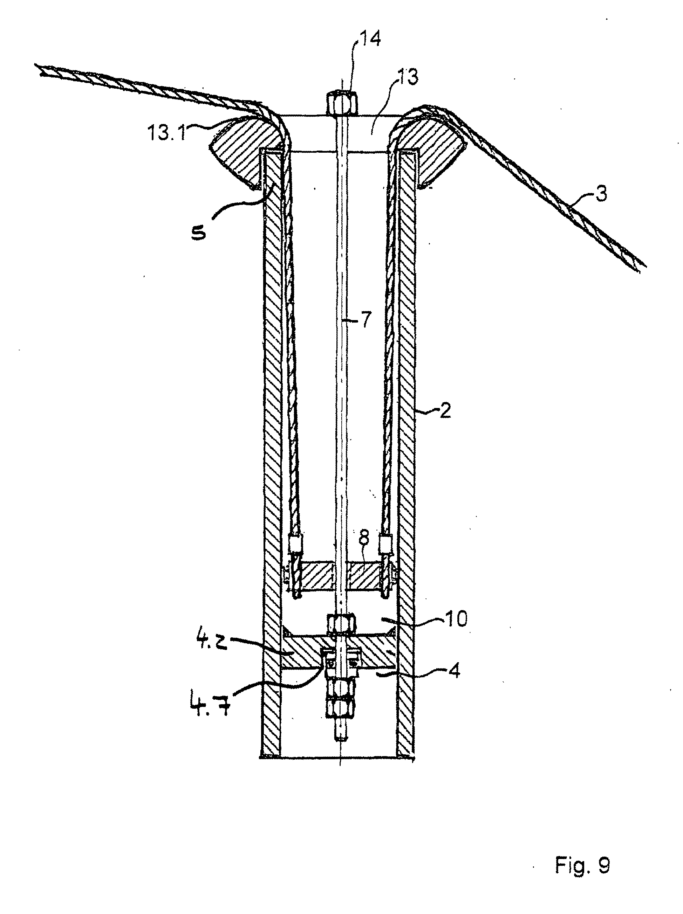

In Fig. 9 ist eine weitere Variante des erfindungsgemäßen Seilspanners 1 schematisch dargestellt. Im Innenraum 10 des Rohrstückes 2 ist das Widerlager 4 mit dem Kugeldrucklager 4.7 angeordnet, durch das die Spannstange 7 drehbar geführt ist. Der Bügel 4.2 des Widerlagers 4 ist fest mit der Wandung des Rohrstückes 2 verbunden. Die Gegenplatte 4.4 ist mit der Spannstange 7 fest verbunden. Durch Drehen der Spannstange 7 am Spannteil 14 bewegt sich das in Richtung Rohrstückende 5 oberhalb des Widerlagers befindliche Seilaufnahmeteil 8 auf dem Außengewinde der Spannstange 7 in Spannrichtung.

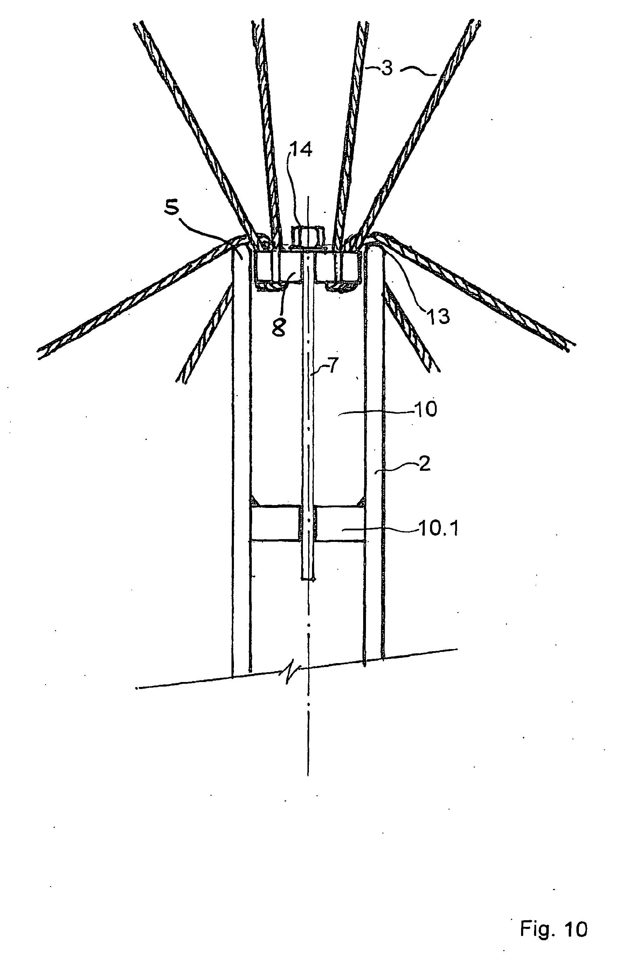

In Fig. 10 ist eine weitere erfindungsgemäße Variante des Seilspanners 1 dargestellt. Diese Ausführung eignet sich insbesondere für den Einsatz in den Bodenspanner 18 im Bereich der Fusspunkte 17 (Fig. 1). Eine im Innenraum 10 des Rohrstückes 2 befestigte Halteplatte 10.1 weist eine mit einem Innengewinde versehene Bohrung auf, in die die Spannstange 7 eingeschraubt ist. Durch Betätigung des Spannteiles 14 der Spannstange 7 wird das Seilaufnahmeteil 8 in Spannrichtung bewegt. Das Rohrstückende 5 ist hier ebenfalls mit einer seilschonenden Unterlage 13 versehen.

### Bezugszeichenliste

- 1: Seilspanner
- 2: Rohrstück (Rohrschuss)
- 3: Seil
- 4: Widerlager
4.1 Befestigungsschraube
4.2 Bügel
4.3 Schenkel
4.4 Gegenplatte
4.5 Grundplatte
4.6 Bohrung
4.7 Kugeldrucklager
- 5: Rohrstückende
- 6: Seilöffnung
- 7: Spannstange
- 8: Seilaufnahmeteil
- 9: Hohlkörper
9.1 Mittelteil
9.2 Deckel
9.3 Halteschraube
- 10: Innenraum
10.1 Halteplatte
- 11: Spannöffnung
- 12: Spannteilöffnung
- 13: Unterlage
13.1 Radius
13.2 Rohrstückaufnahme
13.3 Gewindebohrung
- 14: Spannteil
14.1 Mutter
- 15: Stützmast
- 16: Toppunkt
- 17: Fußpunkt
- 18: Bodenspanner
- 19: Gerüstpunkt
19.1 Gerüstrohr

## Patentansprüche

1. Seilspannvorrichtung für ein Seilnetzwerk aus miteinander verbundenen Seilen (3),
**dadurch gekennzeichnet, dass** Teile (8, 7, 4) eines Seilspanners (1) zumindest teilweise in einem Innenraum (10) eines Rohrstückes (2) angeordnet sind und Seile (3) in dem Innenraum (10) des Rohrstückes (2) gehalten sind.

2. Seilspannvorrichtung nach Anspruch 1,
**dadurch gekennzeichnet, dass**
der Seilspanner (1) ein Widerlager (4), eine durch das Widerlager (4) geführte und drehbar gelagerte Spannstange (7) und ein auf der Spannstange (7) verschiebbar angeordnetes Seilaufnahmeteil (8) umfasst.

3. Seilspannvorrichtung nach Anspruch 1 oder 2,
**dadurch gekennzeichnet, dass**
das Widerlager (4) und die Spannstange (7) außerhalb des Rohrstückes (2) im Bereich eines Rohrstückendes (5) angeordnet sind.

4. Seilspannvorrichtung nach einem der Ansprüche 1 bis 3,
**dadurch gekennzeichnet, dass**
das Widerlager (4) außerhalb des Rohrstückes (2) am Rohrstückende (5) aufgesetzt und befestigt ist.

5. Seilspannvorrichtung nach einem der Ansprüche 1 bis 4,
**dadurch gekennzeichnet, dass**
ein Spannteil (14) der Spannstange (7) außerhalb des Rohrstückes (2) angeordnet ist.

6. Seilspannvorrichtung nach einem der Ansprüche 1 bis 5,
**dadurch gekennzeichnet, dass**
die Spannstange (7) ein Gewinde aufweist, auf der das ein Innengewinde aufweisende Seilaufnahmeteil (8) durch Drehung verschiebbar angeordnet ist.

7. Seilspannvorrichtung nach einem der Ansprüche 1 bis 6,
**dadurch gekennzeichnet, dass**
das Seilaufnahmeteil (8) Befestigungselemente für die Enden der Seile (3) aufweist.

8. Seilspannvorrichtung nach einem der Ansprüche 1 bis 7,
**dadurch gekennzeichnet, dass**
das Widerlager (4) an der inneren Wandung eines auf dem Rohrstück (2) aufgesetzten Hohlkörpers (9) befestigt ist, wobei die Spannstange (7) durch die Hohlkörper (9) geführt und das Spannteil (14) der Spannstange (7) so angeordnet ist, dass es außerhalb des Hohlkörpers (9) bedienbar ist.

9. Seilspannvorrichtung nach einem der Ansprüche 1 bis 8,
**dadurch gekennzeichnet, dass**
das Rohrstückende (5) mit einem Seilöffnungen (6) aufweisenden Hohlkörper (9) abgedeckt ist, wobei der Hohlkörper (9) einteilig oder mehrteilig zusammengesetzt ist.

10. Seilspannvorrichtung nach einem der Ansprüche 1 bis 9,
**dadurch gekennzeichnet, dass**
der Hohlkörper (9) eine mit einem Deckel (12) verschließbare Spannöffung (11) aufweist.

11. Seilspannvorrichtung nach Anspruch 1,
**dadurch gekennzeichnet, dass**
der Seilspanner (1), ein Seilaufnahmeteil (8), eine durch dieses geführte und dort drehbar fixierte Spannstange (7) mit Spannteil (14) und ein im Innenraum (10) des Rohrstückes (2) befestigte, eine Bohrung mit Innengewinde aufweisende Halteplatte (10.1) umfasst, in die die ein Außengewinde aufweisende Spannstange (7) eindrehbar ist.

12. Seilspannvorrichtung nach Anspruch 1,
**dadurch gekennzeichnet, dass**
der Seilspanner (1) ein Seilaufnahmeteil (8) und eine am Seilaufnahmeteil (8) fixierte Spannstange (7) umfasst, deren Spannteil (14) außerhalb des Innenraumes (10) des an einem Hohlkörper (9) angesetzten Rohrstückes (2) in diesem Hohlkörper (9) angeordnet ist.

13. Seilspannvorrichtung nach einem der Ansprüche 1 bis 12,
**dadurch gekennzeichnet, dass**
die aus dem Rohrstückende (5) austretenden Seile (3) auf einer seilschonenden Unterlage (13) aufliegen.

14. Seilspannvorrichtung nach Anspruch 1 bis 13,
**dadurch gekennzeichnet, dass**
auf einer Mastspitze eines als Mastrohr ausgebildeten Mittelmastes ein Seilspanner für Seile des Seilnetzwerkes angeordnet ist.

15. Seilspannvorrichtung nach Anspruch 14,
**dadurch gekennzeichnet, dass**
der Seilspanner ein auf die Mastspitze des Mastrohres aufgesetztes und dort befestigtes Widerlager aufweist, in dem eine Spannstange, auf der eine verschiebbare Seilaufnahme angeordnet ist, drehbar gelagert ist.

16. Seilspannvorrichtung nach Anspruch 14 oder 15,
**dadurch gekennzeichnet, dass**
der Seilspanner einen auf die Mastspitze des Mastrohres aufgesetzten und dort befestigten Hohlkörper mit Seilöffnungen und die vertikal durch den Hohlkörper in das Mastrohr geführte Spannstange aufweist, an der die auf der Spannstange verschiebbare Seilaufnahme angeordnet ist, und die in der Wandung des Hohlkörpers als Widerlager drehbar gelagert ist.

17. Seilspannvorrichtung nach einem der Ansprüche 14 bis 16,
**dadurch gekennzeichnet, dass**
die Spannstange des Seilspanners in einem als Bügel ausgebildeten Widerlager drehbar gelagert ist, wobei der Bügel mittels Schenkel mit der Mastspitze verbunden ist.

18. Seilspannvorrichtung nach Anspruch 17,
**dadurch gekennzeichnet, dass**
die Mastspitze mit einem Hohlkörper verkleidet ist.

19. Seilspannvorrichtung nach einem der Ansprüche 14 bis 18,
**dadurch gekennzeichnet, dass**
an der Mastspitze, in das Mastrohr eingeführt, ein Abdeckungsring (Buchse) angeordnet ist.

20. Seilspannvorrichtung nach einem der Ansprüche 14 bis 19,
**gekennzeichnet durch**
- einen auf die Mastspitze eines Mastrohres geschobenen und dort befestigten Hohlkörper, der Seilöffnungen aufweist,
- und eine vertikal **durch** den gerundeten Hohlkörper in das Mastrohr geführte Spannstange (7), an der eine auf der Spannstange verschiebbare Seilklemme angeordnet ist.

## Claims

1. A rope tensioning device for a rope network made of interconnected ropes (3),
**characterized in that** parts (8, 7, 4) of a rope tensioner (1) are at least partly arranged in an interior space (10) of a tube section (2), and ropes (3) are held in said interior space (10) of said tube section (2).

2. A rope tensioning device according to claim 1,
**characterized in that**
the rope tensioner (1) comprises an abutment (4), a tensioning rod (7) which is passed through said abutment (4) and is supported so as to be rotatable, and a rope receiving part (8) which is arranged on said tensioning rod (7) so as to be displaceable.

3. A rope tensioning device according to claim 1 or 2,
**characterized in that**
the abutment (4) and the tensioning rod (7) are arranged outside the tube section (2) in the area of a tube section end (5).

4. A rope tensioning device according to any one of claims 1 to 3,
**characterized in that**
the abutment (4) rests on the tube section end (5) and is secured thereto outside the tube section (2).

5. A rope tensioning device according to any one of claims 1 to 4,
**characterized in that**
a tensioning part (14) of the tensioning rod (7) is arranged outside the tube section (2).

6. A rope tensioning device according to any one of claims 1 to 5,
**characterized in that**
the tensioning rod (7) has a thread on which the rope receiving part (8), which has an internal thread, is arranged so as to be displaceable by rotation.

7. A rope tensioning device according to any one of claims 1 to 6,
**characterized in that**
the rope receiving part (8) comprises securing elements for the ends of the ropes (3).

8. A rope tensioning device according to any one of claims 1 to 7,
**characterized in that**
the abutment (4) is secured to the inner wall of a hollow body (9) which rests on the tube section (2), wherein the tensioning rod (7) is passed through said hollow bodies (9), and the tensioning part (14) of the tensioning rod (7) is arranged so as to be operable outside said hollow body (9).

9. A rope tensioning device according to any one of claims 1 to 8,
**characterized in that**
the tube section end (5) is covered by a hollow body (9) having rope openings (6), wherein said hollow body (9) is made of a single piece or composed of several pieces.

10. A rope tensioning device according to any one of claims 1 to 9,
**characterized in that**
the hollow body (9) has a tensioning opening (11) which can be closed by a lid (12).

11. A rope tensioning device according to claim 1,
**characterized in that**
the rope tensioner (1) comprises a rope receiving part (8), a tensioning rod (7) which is passed therethrough and is fixed therein so as to be rotatable and includes a tensioning part (14), and a holding plate (10.1) which is secured within the interior space (10) of the tube section (2) and has an internally threaded bore into which the externally threaded tensioning rod (7) can be screwed.

12. A rope tensioning device according to claim 1,
**characterized in that**
the rope tensioner (1) comprises a rope receiving part (8) and a tensioning rod (7) which is fixed to said rope receiving part (8), wherein the tensioning part (14) of said tensioning rod (7) is arranged in a hollow body (9) outside the interior space (10) of the tube section (2) which is attached to said hollow body (9).

13. A rope tensioning device according to any one of claims 1 to 12,
**characterized in that**
the ropes (3) which extend out of the tube section end (5) rest on a rope protection support (13).

14. A rope tensioning device according to claims 1 to 13,
**characterized in that**
a rope tensioner for the ropes of a rope network is arranged on a mast top of a central mast which is designed as a tubular mast.

15. A rope tensioning device according to claim 14,
**characterized in that**
the rope tensioner comprises an abutment which rests on the mast top of the tubular mast and is secured thereto, wherein a tensioning rod, on which a displaceable rope receiving part is arranged, is supported so as to be rotatable in said abutment.

16. A rope tensioning device according to claim 14 or 15,
**characterized in that**
the rope tensioner comprises a hollow body which rests on the mast top of the tubular mast and is secured thereto and has rope openings, and the tensioning rod which is introduced vertically in the tubular mast through said hollow body, wherein the rope receiving part, which can be displaced on said tensioning rod, is arranged on said tensioning rod, and said tensioning rod is supported in the wall of the hollow body, which acts as an abutment, so as to be rotatable therein.

17. A rope tensioning device according to any one of claims 14 to 16,
**characterized in that**
the tensioning rod of the rope tensioner is supported so as to be rotatable in an abutment which is designed as a bracket, wherein said bracket is connected to the mast top by means of legs.

18. A rope tensioning device according to claim 17,
**characterized in that**
the mast top is covered by a hollow body.

19. A rope tensioning device according to any one of claims 14 to 18,
**characterized in that**
a cover ring (bush) is arranged at the mast top, which cover ring is inserted in the tubular mast.

20. A rope tensioning device according to any one of claims 14 to 19,
**characterized by**
- a hollow body which is slid onto the mast top of a tubular mast and is secured thereto and which has rope openings,
- and a tensioning rod (7) which is introduced vertically in the tubular mast through the rounded hollow body, wherein a rope clamp is arranged on said tensioning rod (7) so as to be displaceable thereon.

## Revendications

1. Dispositif tendeur de cordes pour un réseau de cordes en cordes attachées ensemble (3),
**caractérisé en ce que** des parties (8, 7, 4) d'un tendeur de cordes (1) sont disposées au moins partiellement dans un espace intérieur (10) d'un segment de tube (2) et des cordes (3) sont maintenues dans l'espace intérieur (10) du segment de tube (2).

2. Dispositif tendeur de cordes selon la revendication 1,
**caractérisé en ce que**
le tendeur de cordes (1) comprend une butée (4), une barre de tension (7) passée par la butée (4) et montée de façon pivotante, et un logement de cordes (8) disposé de façon mobile sur la barre de tension (7).

3. Dispositif tendeur de cordes selon la revendication 1 ou 2,
**caractérisé en ce que**
la butée (4) et la barre de tension (7) sont disposées à l'extérieur du segment de tube (2) dans la zone d'une extrémité du segment de tube (5).

4. Dispositif tendeur de cordes selon l'une des revendications 1 à 3,
**caractérisé en ce que**
la butée (4) est posée et fixée à l'extérieur du segment de tube (2), sur l'extrémité du segment de tube (5).

5. Dispositif tendeur de cordes selon l'une des revendications 1 à 4,
**caractérisé en ce que**
un élément de tension (14) de la barre de tension (7) est disposé à l'extérieur du segment de tube (2).

6. Dispositif tendeur de cordes selon l'une des revendications 1 à 5,
**caractérisé en ce que**
la barre de tension (7) présente un filet, sur lequel le logement de cordes (8) présentant un filet intérieur est disposé de façon mobile par rotation.

7. Dispositif tendeur de cordes selon l'une des revendications 1 à 6,
**caractérisé en ce que**
le logement de cordes (8) présente des éléments de fixation pour les extrémités des cordes (3).

8. Dispositif tendeur de cordes selon l'une des revendications 1 à 7,
**caractérisé en ce que**
la butée (4) est fixée sur la paroi intérieure d'un corps creux (9) posé sur le segment de tube (2), la barre de tension (7) étant passée par le corps creux (9) et l'élément de tension (14) de la barre de tension (7) étant disposé de telle sorte qu'il est manipulable à l'extérieur du corps creux (9).

9. Dispositif tendeur de cordes selon l'une des revendications 1 à 8,
**caractérisé en ce que**
l'extrémité de segment de tube (5) est recouverte par un corps creux (9) présentant des ouvertures pour cordes (6), le corps creux (9) étant composé d'une partie ou de plusieurs parties.

10. Dispositif tendeur de cordes selon l'une des revendications 1 à 9,
**caractérisé en ce que**
le corps creux (9) présente une ouverture de tension (11) fermable avec un couvercle (12).

11. Dispositif tendeur de cordes selon la revendication 1,
**caractérisé en ce que**
le tendeur de cordes (1) comprend un logement de cordes (8), une barre de tension (7) passée à travers celui-ci et fixée de façon pivotable sur celui-ci avec élément de tension (14) et une plaque de fixation (10.1) fixée dans l'espace intérieur (10) du segment de tube (2), présentant un alésage avec filet intérieur, dans laquelle la barre de tension (7) présentant un filet extérieur peut être vissée.

12. Dispositif tendeur de cordes selon la revendication 1,
**caractérisé en ce que**
le tendeur de cordes (1) comprend un logement de cordes (8) et une barre de tension (7) fixée sur le logement de cordes (8), l'élément de tension (14) de celle-ci étant disposé dans un corps creux (9), hors de l'espace intérieur (10) du segment de tube (2) attenant à ce corps creux (9).

13. Dispositif tendeur de cordes selon l'une des revendications 1 à 12,
**caractérisé en ce que**
les cordes (3) sortant de l'extrémité du segment de tube (5) reposent sur un support (13) protégeant les cordes.

14. Dispositif tendeur de cordes selon la revendication 1 à 13,
**caractérisé en ce que**
sur un sommet de mât d'un mât central formé comme tube de mât, un tendeur de cordes est disposé pour des cordes du réseau de cordes.

15. Dispositif tendeur de corde selon la revendication 14,
**caractérisé en ce que**
le tendeur de cordes présente une butée posée et fixée au sommet du tube de mât, dans laquelle une barre de tension sur laquelle est disposé un logement de cordes mobile est montée de façon pivotante.

16. Dispositif tendeur de corde selon la revendication 14 ou 15,
**caractérisé en ce que**
le tendeur de cordes présente un corps creux avec des ouvertures pour cordes posé et fixé au sommet du tube de mât et la barre de tension passée verticalement par le corps creux dans le tube de mât, sur laquelle le logement de cordes déplaçable sur la barre de tension est disposé, et laquelle est montée de façon pivotante dans la paroi du corps creux faisant fonction de butée.

17. Dispositif tendeur de corde selon l'une des revendications 14 à 16,
**caractérisé en ce que**
la barre de tension du tendeur de cordes est montée de façon pivotante dans une butée formée comme étrier, l'étrier étant fixé au sommet de mât au moyen d'une branche.

18. Dispositif tendeur de corde selon la revendication 17,
**caractérisé en ce que**
le sommet de mât est coiffé par un corps creux.

19. Dispositif tendeur de corde selon l'une des revendications 14 à 18,
**caractérisé en ce que**
au sommet de mât, introduite dans le tube de mât, une bague de protection (manchon) est disposée.

20. Dispositif tendeur de corde selon l'une des revendications 14 à 19,
**caractérisé par**
- un corps creux enfoncé et fixé sur le sommet d'un tube de mât, lequel corps présente des ouvertures pour cordes,
- et une barre de tension (7) passée verticalement dans le tube de mât par le corps creux arrondi, sur laquelle une pince de cordes déplaçable sur la barre de tension est disposée.
